# EUROPEAN PATENT SPECIFICATION

(11) **EP 1 459 916 B1**
(45) Date of publication and mention of the grant of the patent: **25.10.2006**
(21) Application number: 03251617.1
(22) Date of filing: 17.03.2003
(51) Int. Cl.: B60G 17/027, B60G 11/02, B60G 13/08, F16F 1/22, F16F 15/00, F16F 9/10, F16F 13/00, F16F 9/53

(54) **Damping structure**
Dämpfungsstruktur
Structure d'amortissement

(43) Date of publication of application: 22.09.2004
(73) Proprietor: ArvinMeritor Technology, LLC, Troy, MI 48084 (US)
(72) Inventor: Carlstedt, Robert, Rochaester Hills, Michigan 48306 (US); Whitney, Daniel Eugene, Arlington, Massachusetts (US); Smith, Mark, Troy, Michigan 48084 (US); Geib, Eric Stephen, Fenton, Michigan 48430 (US); Foster, Steven, Rochester, Michigan 48306 (US); Clisch, Richard, Canton, Michigan 48187 (US); Shih, Shan, Troy, Michigan 48098 (US); Marcos Munoz, Juan Jose, 31180 Cizur Mayor (Navara), Pamplona (ES)
(74) Representative: Jones, John Bryn

(56) References cited:
- DE-A- 4 021 166
- DE-A- 4 337 200
- DE-A- 19 743 543
- FR-A- 2 828 253
- US-A- 1 707 111
- US-A- 5 068 018
- PATENT ABSTRACTS OF JAPAN vol. 010, no. 146 (M-482), 28 May 1986 (1986-05-28) & JP 61 002932 A (HORIKIRI BANE SEISAKUSHO:KK), 8 January 1986 (1986-01-08)

## Description

### BACKGROUND OF THE INVENTION

The present invention relates generally to a method for building a structure for vibration attenuation of structural elements in a vehicle.

A suspension system absorbs road shock and other vibrations, while providing for a smooth and comfortable ride. The suspension system responds to wheel disturbances and reacts to maintain wheel contact with the road surface. Damping systems produce opposing forces which counteract vibrations produced during vehicle operation. Damping forces provided by the suspension system cancel resonant responses which cause unwanted motion. In the prior art, fluid filled shock absorbers in the suspension system are used to counteract these vibrations. As fluid is commonly utilized to provide damping, the damping force increases approximately proportionally with the viscosity of the damping fluid. A drawback to prior damping systems is that these shock absorbers are passive in nature.

US2003/0034595A1 shows a mounting system in which air or other gas is used to effect vibration damping.

Hence, there is a need in the art for an improved structure for vibration attenuation of structural elements in a vehicle.

### SUMMARY OF THE INVENTION

This invention relates to a method for building a structure for vibration attenuation of structural elements in a vehicle.

The structure includes an upper sheet, a lower sheet and an intermediate sheet perforated with a plurality of holes. The sheets, preferably made of steel, are stamped to a desired shape. A plurality of elastic strips are positioned such that a layer of elastic strips are located between each the sheets when assembled. The sheets are assembled so that the intermediate sheet is positioned substantially between the upper sheet and the lower sheet, and viscous fluid is dispersed between each layer. The sheets are secured, preferably by welding, sealing the viscous fluid within the structure. Movement of the fluid through the holes provides vibration attenuation and damping when the structure is compressed, extended, bent or submitted to vibrations.

In a second embodiment, a continuous elastic sealing strip is positioned between and substantially inside the edges of the upper and lower sheets, but outside the edge of the intermediate sheet, the sealing strip containing the fluid. The structure is preferably secured, such as by a plurality of rivets positioned between the edge of the inner and outer sheet and the sealing strip.

In a third embodiment, electro-rheological or magnetic-rheological fluid is utilized. Piezo-elements positioned in the suspension system provide an electrical input to the fluid in the structure to change the state of the fluid and alter the relative stiffness of the structure in response to a proportional increase in load.

Accordingly, the present invention provides a method for building a structure for vibration attenuation of structural elements in a vehicle.

These and other features of the present invention will be best understood from the following specification and drawings.

### BRIEF DESCRIPTION OF THE DRAWINGS

The various features and advantages of the invention will become apparent to those skilled in the art from the following detailed description of the currently preferred embodiment. The drawings that accompany the detailed description can be briefly described as follows:
Figure 1 illustrates a vehicle suspension system including leaf springs and the structure of the present invention;
Figure 2 illustrates a side view of the intermediate sheet, upper sheet, and lower sheet of the present invention stamped to a desired shape;
Figure 3 illustrates a side view of the intermediate sheet, upper sheet, and lower sheet of the present invention including a plurality of elastic strips on the upper surfaces of the sheets;
Figure 4 illustrates a side view of the intermediate sheet, upper sheet, and lower sheet of the present invention including a plurality of elastic strips on the lower surfaces of the sheets;
Figure 5 illustrates a side view of the assembled structure of the present invention;
Figure 6 illustrates a side view of a second embodiment of the present invention which utilizes rivets;
Figure 7 illustrates the present invention utilizing electrical elements; and
Figure 8 illustrates a perspective view of the embodiment illustrated in Figure 7;
Figure 9 illustrates the present invention utilizing piezo-elements; and
Figure 10 illustrates a perspective view of the embodiment illustrated in Figure 9.

### DETAILED DESCRIPTION OF THE PREFERRED EMBODIMENT

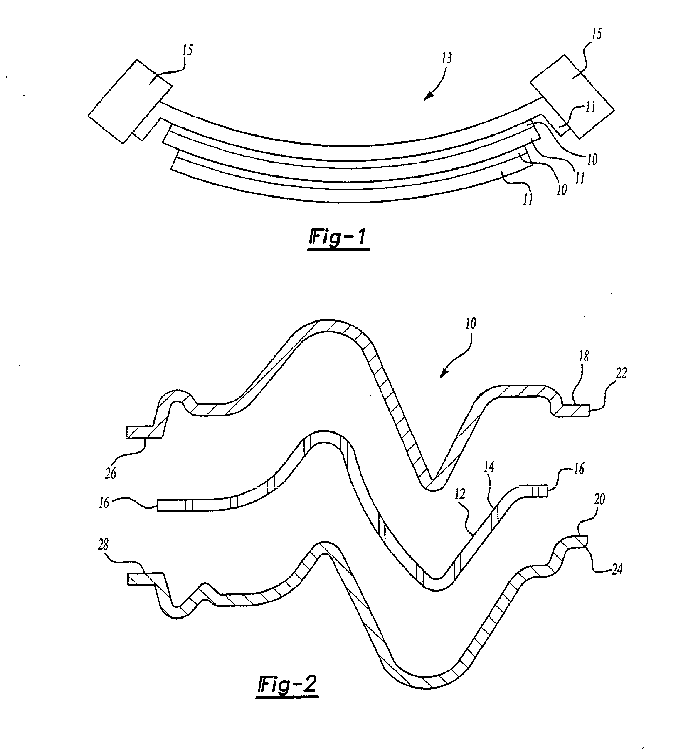

Figure 1 illustrates a vehicle suspension system 13. The structure 10 of the present invention is positioned between a suspension component, such as a leaf spring 11, providing damping forces and vibration attenuation between two vehicle frame members 15, shown schematically. The structure 10 may also be used in place of a standard sheet component, such as in a strut tower, in seats, and in a vehicle a sub-frame.

As illustrated in Figure 2, the structure 10 is formed of an intermediate sheet 12, an upper sheet 18, and a lower sheet 20. It is preferred that the sheets 12, 18 and 20 be made of steel. The intermediate sheet 12 is perforated with a plurality of holes 14 at defined sites and of a defined distribution, and the sheet 12 is stamped to a desired shape. Excess material is removed from the intermediate sheet 12 to create an intermediate edge 16. Although the structure 10 can include any number of intermediate sheets 12, only one intermediate sheet 12 is described and illustrated.

The upper sheet 18 and lower sheet 20 are stamped to a desired shape, sheets 12, 18 and 20 being stamped in shape such the intermediate sheet 12 will substantially fit between the upper sheet 18 and lower sheet 20 when assembled to create the structure 10. Excess material is removed from the upper sheet 18 and lower sheet 20, creating an upper edge 22 and lower edge 24, respectively, which are finished to form an upper flange 26 and a lower flange 28, respectively.

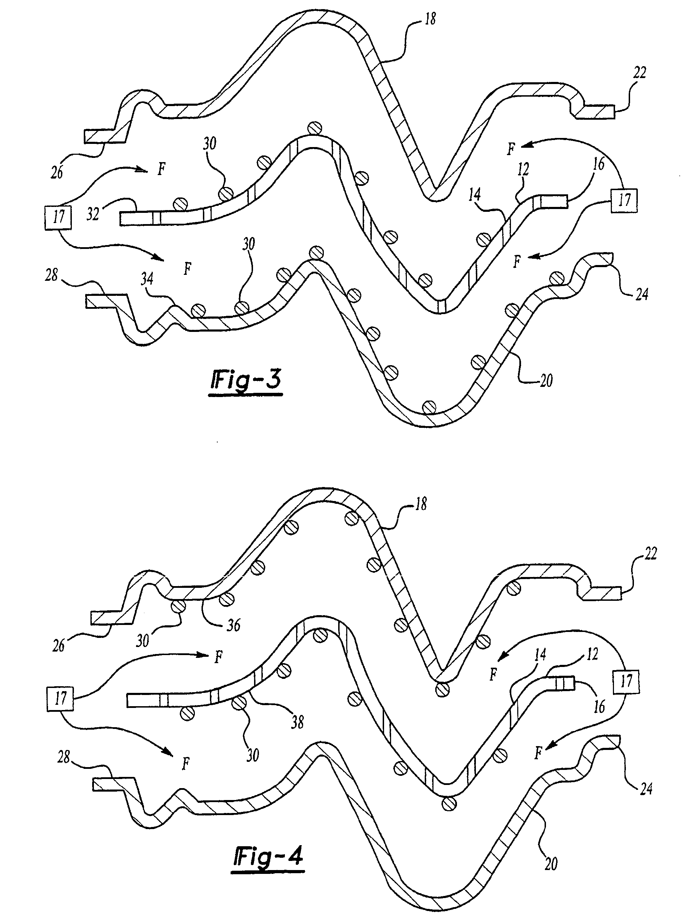

As shown in Figure 3, a plurality of elastic strips 30, preferably rubber, are bonded to the sheets 12, 18 and 20 after stamping so that a layer of elastic strips 30 are positioned between each of the sheets 12, 18 and 20 when assembled into the structure 10. The elastic strips 30 are positioned to substantially extend across the sheets 12, 18 and 20 to and from respective edges 16, 22 and 24. In the embodiment shown in Figure 3, the plurality of elastic strips 30 are bonded to the upper surface 32 of the intermediate sheet 12 and the upper surface 34 of the lower sheet 20, the upper sheet 18 including no elastic strips 30. In another embodiment, shown in Figure 4, the plurality of elastic strips 30 are bonded to the lower surface 36 of the upper sheet 18 and the lower surface 38 of the intermediate sheet 12, the lower sheet 20 including no elastic strips 30. The elastic strips 30 can also be bonded in other arrangements, such as only on the intermediate sheet 12 or alternatively only on the upper sheet 18 and lower sheet 20.

For certain stamping technologies, such as hydroforming, it is preferred to bond the elastic strips 30 to the sheets 12, 18 and 20 prior to stamping. Whether the elastic strips 30 are bonded to the sheets 12, 18 and 20 before or after stamping is determined by the shape of the sheets 12, 18 and 20, as well as the final distribution of the elastic strips 30.

As further shown in Figures 3 and 4, a viscous fluid F is dispersed on the upper surface 32 of the intermediate sheet 12 and the upper surface 34 of the lower sheet 20 by a fluid dispenser 17 during assembly.

When assembled, fluid F is dispersed on the upper surface 34 of the lower sheet 20, and the intermediate sheet 12 is positioned substantially over the lower sheet 20. Additional fluid F is then dispersed on the upper surface 32 of the intermediate sheet 12, the upper sheet 18 being positioned substantially over the intermediate sheet 12.

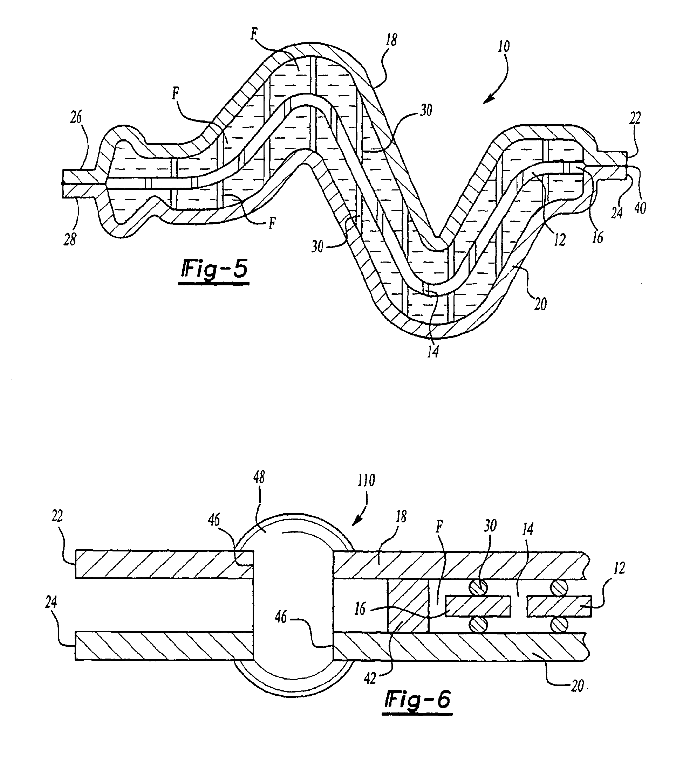

As illustrated in Figure 5, when assembled, the upper flange 26 of the upper sheet 18 substantially contacts the lower flange 28 of the lower sheet 18. The contacting lower flange 28 and upper flange 26 are secured, sealing the viscous fluid F within the structure 10. It is preferred that the flanges 26 and 28 of the structure 10 be secured by welding, such as seam-welding. The welding 40 extends substantially around the entire upper edge 22 and lower edge 24 of the structure 10, the intermediate edge 16 of the intermediate sheet 12 being trapped within the structure 10. The assembled structure 10 provides vibration attenuation and damping when it is compressed, extended, bent or submitted to vibrations as the fluid F passes through the plurality of holes 14.

Figure 6 illustrates an alternative embodiment of the present invention. In this embodiment, the intermediate sheet 12 is substantially smaller in dimension than the upper sheet 18 and the lower sheet 20. When the structure 10 is assembled, a continuous elastic sealing strip 42 is positioned substantially inside the edges 22 and 24 of the upper sheet 20 and lower sheet 22, respectively, but outside of the intermediate edge 16 of the intermediate sheet 12. The sealing strip 42 contains the fluid F in the structure 110. The upper sheet 18 and lower sheet 20 are secured together by a plurality of attachment members 48 positioned substantially outside of the sealing strip 42. The sheets 18 and 20 each include a plurality of holes 46. When the structure 110 is assembled, the holes 46 in the upper sheet 18 substantially align with holes 46 in the lower sheet 20 to receive the attachment members 48, such as rivets. The attachment member 48 maintains compression force and presses on the sealing strip 42 to contain the fluid F within the structure 110.

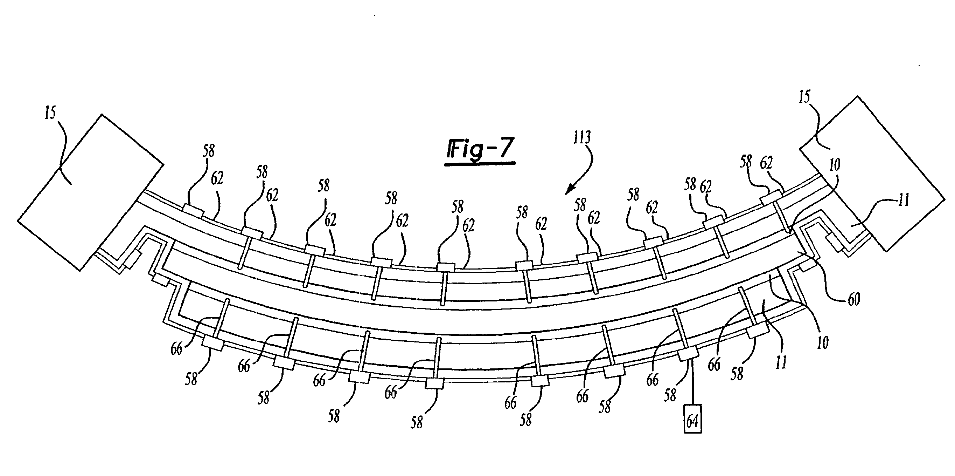

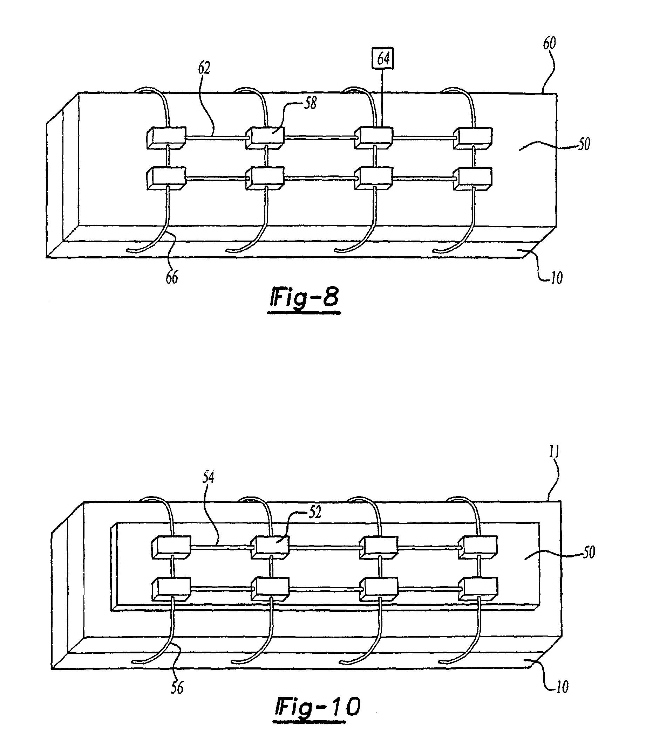

Further damping can occur by using electro-rheological or magnetic-rheological fluid F, as illustrated in the vehicle suspension system 113 shown in Figure 7. When in the liquid state, the electro-rheological or magnetic-rheological fluid F is flexible and soft. Electrical elements 58, such as capacitors or coils, are located on a load carrying member 60 and connected by a plurality of lead wires 62, shown in Figure 8. A control voltage generated by a power source 64 is applied to the electrical elements 58 to generate an electric field or a magnetic field, supplying voltage to the structure 10 by a connecting wire 66. The power source 64 is either inside the system or outside the system, such as a battery. The control voltage increase the viscosity of the fluid F, increasing the relative stiffness of the structure 10.

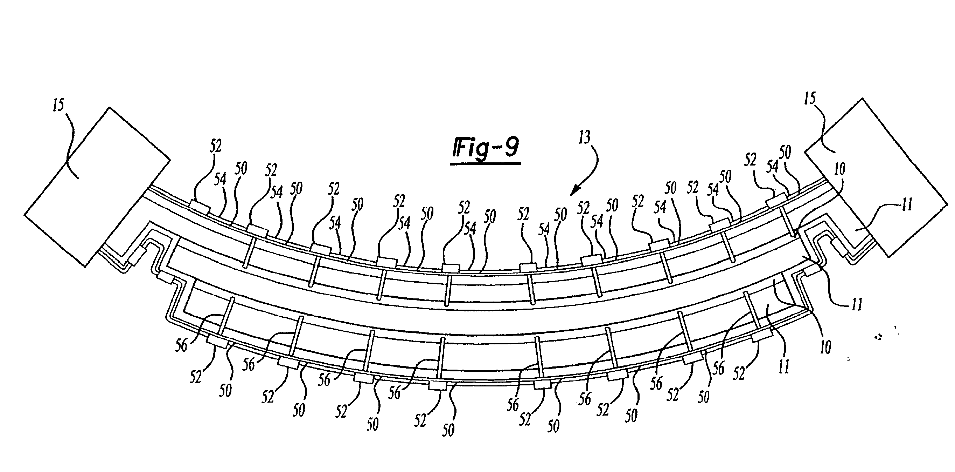

Alternatively, as shown in Figure 9, a vehicle suspension system 13 uses energy converters 52 to transfer the mechanical energy into electrical energy to control the viscosity of the electro-rheological or magnetic-rheological fluid F. When in the liquid state, the electro-rheological or magnetic-rheological fluid F is flexible and soft. The converters 52 can be a plurality of piezo-elements 52 mounted to a charge strip 50 on a load carrying member 11, such as a leaf spring, to derive the electrical input which increases the viscosity of the fluid F and the stiffness of the structure 10. The piezo-elements 52 are connected by a plurality of lead wires 54. Preferably, the piezo-elements 52 be bonded or glued to the charge strip 50. An increase in load deflects and energizes the piezo-elements 52 to produce an electrical input, supplying voltage to the structure 10 by a connecting wire 54, as illustrated in Figure 10. The electrical input increases the viscosity of the fluid F, increasing the relative stiffness of the structure 10 and producing damping by the opposing forces created in the structure 10. The voltage signal is related to the displacement of the suspension and the piezo-element 52 deflection and provides voltage at desired locations of the structure 10. The piezo-elements 52 can provide constant voltage to selected portions of the structure 10, allowing for control over the feel of the ride.

There are several advantages to utilizing the structure 10 of the present invention in a vehicle. For one, the structure 10 provides damping and vibration attenuation, reducing vibration and noise. Additionally, there is more freedom in designing components for a vehicle.

The foregoing description is only exemplary of the principles of the invention. Many modifications and variations of the present invention are possible in light of the above teachings. The preferred embodiments of this invention have been disclosed, however, so that one of ordinary skill in the art would recognize that certain modifications would come within the scope of this invention. It is, therefore, to be understood that within the scope of the appended claims, the invention may be practiced otherwise than as specially described. For that reason the following claims should be studied to determine the true scope and content of this invention.

## Claims

1. A method for forming a suspension structure (13) comprising the steps of:
forming a damping structure (10) by forming a plurality of holes (14) in at least one intermediate sheet (12), positioning said at least one intermediate sheet substantially between an upper sheet (18) having an upper edge (22) and a lower sheet (20) having a lower edge (24), positioning a plurality of elastic members (30) substantially between each of said sheets, **characterised in that** the method further comprises dispensing a fluid substantially between each of said sheets, securing said upper sheet and said lower sheet together substantially proximate to said upper edge and said lower edge to seal said fluid within said damping structure; and
attaching said damping structure into a suspension component (11).

2. The method as recited in claim 1 further comprising the step of shaping said upper sheet (18), said lower sheet (20), and said at least one intermediate sheet (18) to a desired shape, each of said sheets being substantially shaped such that said sheets substantially interfit when assembled.

3. The method as recited in claim 1 or 2 wherein the step of positioning said plurality of elastic members (30) further comprises securing each of said plurality of elastic members to an upper surface (32) of each of said at least one intermediate sheet and to an upper surface (34) of said lower sheet.

4. The method as recited in claim 1 or 2 wherein the step of positioning said plurality of elastic members (30) further comprises securing each of said plurality of elastic members (30) to a lower surface (38) of each of said at least one intermediate sheet and to a lower surface (36) of said upper sheet.

5. The method as recited in any preceding claim wherein the step of securing said upper sheet (18) to said lower sheet (20) further includes welding said upper edge (22) of said upper sheet to said lower edge (24) of said lower sheet to seal the fluid within said damping structure.

6. The method as recited in any one of claims 1 to 4 wherein the step of securing said upper sheet (18) to said lower sheet (20) further includes passing a plurality of attachments members (48) through a plurality of aligned holes (46) on said upper sheet and said lower sheet, said fluid being sealed by a continuous elastic strip (42) positioned substantially between said upper sheet and said lower sheet.

7. The method as recited in claim 6 wherein said plurality of attachment members (48) are positioned substantially between said elastic strip (42) and said aligned upper edge and said lower edge.

8. The method as recited in claim 6 or 7 wherein said plurality of attachment members (48) are rivets.

9. The method as recited in any preceding claim further comprising the step of securing and electrically connecting a plurality of piezo-elements (52) to a spring, said piezo-elements being electrically connected to said structure, said fluid being reactive to an electrical input produced by said plurality of piezo-elements by a load applied to said spring.

10. The method as recited in claim 9 wherein said piezo-elements (52) apply said electric input to said fluid to substantially alter a state of said fluid.

11. The method as recited in claim 9 or 10 wherein said fluid is electro-rheological.

12. The method as recited in claim 9 or 10 wherein said fluid is magnetic-rheological.

13. The method as recited in any one of claims 1 to 8 further comprising the steps of securing a plurality of electrical elements (58) to a load carrying member, said electrical elements being electrically connected to said structure, and applying a voltage to said electrical elements to produce an electrical input to substantially alter a state of said fluid.

14. The method as recited in any preceding claim wherein a flow of said fluid through said plurality of holes (14) provides a damping effect.

15. A vehicle suspension system (13) comprising:
at least one damping structure (10) including at least one intermediate sheet (12) having a plurality of holes (14), said at least one intermediate sheet being positioned substantially between an upper sheet (18) having an upper edge (22) and a lower sheet (20) having a lower edge (24), said at least one damping structure further including a plurality of elastic members (30) positioned substantially between each of said sheets, **characterised in that** said at least one damping structure includes a fluid and said upper sheet and said lower sheet are secured together substantially proximate to said upper edge and said lower edge to seal said fluid within said at least one damping structure, said at least one damping structure being connected to at least one suspension component (11).

16. The vehicle suspension system (13) as recited in claim 15 wherein there are a plurality of suspension components (11) and a plurality of damping structures (10), each of said plurality damping structures being positioned substantially between said plurality of suspension components.

17. The vehicle suspension system as recited in claim 15 or 16 wherein said suspension (11) component is a spring, preferably a leaf spring

18. The vehicle suspension system as recited in any one of claims 15 to 17 wherein said upper sheet (18), said lower sheet (20), and said at least one intermediate sheet (12) are made of steel.

19. The vehicle suspension system as recited in any one of claims 15 to 18 wherein there are one of said at least one intermediate sheet (12).

20. The vehicle suspension system as recited in any one of claims 15 to 19 wherein said at least one elastic member (20) is made of rubber.

21. The vehicle suspension system as recited in any one of claims 15 to 20 wherein said plurality of elastic members (30) are positioned on an upper surface (32) of each of said at least one intermediate sheet and to an upper surface (34) of said lower sheet.

22. The vehicle suspension system as recited in any one of claims 15 to 20 wherein said plurality of elastic members are positioned on a lower surface (38) of each of said at least one intermediate sheet and to a lower surface (36) of said upper sheet.

23. The vehicle suspension system as recited in any one of claims 15 to 22 wherein said upper sheet (18) and said lower sheet (20) are secured by welding to seal the fluid within said at least one damping structure.

24. The vehicle suspension system as recited in any one of claims 15 to 22 wherein said upper sheet (18) and said lower sheet (20) are secured by attachment members (48).

25. The vehicle suspension system as recited in any one of claims 15 to 24 wherein said vehicle suspension system further includes a plurality of piczo-elements (52) electrically connected to said damping structure, said plurality of piezo-elements providing an electrical input to said damping structure under a load applied to said vehicle suspension system.

26. The vehicle suspension system as recited in claim 25 wherein said electrical input substantially change a state of said fluid.

27. The vehicle suspension system as recited in claim 25 or 26 wherein said fluid is electro-rheological.

28. The vehicle suspension system as recited in claim 25 or 26 wherein said fluid is magnetic-rheological.

29. The vehicle suspension system as recited in any one of claims 15 to 24 wherein said vehicle suspension system further includes a load carrying member including a plurality of electrical elements (58), said plurality of electrical elements being electrically connected to said structure to provide an electrical input to said structure when a voltage is applied to said electrical elements to produce said electrical input to substantially changes a state of said fluid.

30. A method of forming a suspension structure as defined in any one of claims 1 to 14 or a vehicle suspension system as defined in any one of claims 15 to 29 in which the elastic members are elastic strips.

## Patentansprüche

1. Verfahren zur Bildung einer Aufhängungsstruktur (13), mit den folgenden Schritten:
Bilden einer Dämpfungsstruktur (10), indem eine Vielzahl von Löchern (14) in mindestens einer mittleren Schicht (12) ausgebildet werden; Positionieren der mindestens einen mittleren Schicht im Wesentlichen zwischen einer oberen Schicht (18) mit einem oberen Rand (22) und einer unteren Schicht (20) mit einem unteren Rand (24); Positionieren einer Vielzahl von elastischen Teilen (30) im Wesentlichen zwischen jeder dieser Schichten, **dadurch gekennzeichnet, dass** das Verfahren ferner die folgenden Schritte umfasst: Einleiten eines Fluids im Wesentlichen zwischen jede dieser Schichten; Befestigen der oberen Schicht an der unteren Schicht im Wesentlichen in der Nähe des oberen Randes und des unteren Randes, um das Fluid in der Dämpfungsstruktur einzuschließen; und
Befestigen der Dämpfungsstruktur in einem Aufhängungsbauteil (11).

2. Verfahren nach Anspruch 1, bei dem ferner die obere Schicht (18), die untere Schicht (20) und die mindestens eine mittlere Schicht (18) in eine gewünschte Form gebracht werden, wobei jede dieser Schichten im Wesentlichen so geformt wird, dass die zusammengebauten Schichten im Wesentlichen ineinander passen.

3. Verfahren nach Anspruch 1 oder 2, bei dem der Schritt des Positionierens der Vielzahl von elastischen Teilen (30) ferner das Befestigen eines jeden der Vielzahl von elastischen Teilen an der Oberseite (32) einer jeden der mindestens einen mittleren Schicht und an der Oberseite (34) der unteren Schicht umfasst.

4. Verfahren nach Anspruch 1 oder 2, bei dem der Schritt des Positionierens der Vielzahl von elastischen Teilen (30) ferner das Befestigen eines jeden der Vielzahl von elastischen Teilen an der Unterseite einer jeden der mindestens einen mittleren Schicht und an der Unterseite (36) der oberen Schicht umfasst.

5. Verfahren nach einem der vorhergehenden Ansprüche, bei dem der Schritt des Befestigens der oberen Schicht (18) an der unteren Schicht (20) ferner das Verschweißen des oberen Randes (22) der oberen Schicht mit dem unteren Rand (24) der unteren Schicht umfasst, um das Fluid in der Dämpfungsstruktur einzuschließen.

6. Verfahren nach einem der Ansprüche 1 bis 4, bei dem der Schritt des Befestigens der oberen Schicht (18) an der unteren Schicht (20) ferner das Hindurchführen einer Vielzahl von Befestigungsteilen (48) durch eine Vielzahl von ausgerichteten Löchern (46) auf der oberen Schicht und der unteren Schicht umfasst, wobei das Fluid durch einen durchgehenden elastischen Streifen (42) eingeschlossen wird, der im Wesentlichen zwischen der oberen Schicht und der unteren Schicht positioniert ist.

7. Verfahren nach Anspruch 6, bei dem die Vielzahl von Befestigungsteilen (48) im Wesentlichen zwischen dem elastischen Streifen (42) und dem ausgerichteten oberen und unteren Rand positioniert sind.

8. Verfahren nach Anspruch 6 oder 7, bei dem die Vielzahl von Befestigungsteilen (48) Niete sind.

9. Verfahren nach einem der vorhergehenden Ansprüche, bei dem ferner eine Vielzahl von Piezo-Elementen (52), die mit der Struktur elektrisch verbunden sind, an einer Feder befestigt und mit dieser elektrisch verbunden werden, wobei das Fluid auf ein elektrisches Eingangssignal reagieren kann, das von der Vielzahl von Piezo-Elementen erzeugt wird, wenn die Feder mit einer Kraft beaufschlagt wird.

10. Verfahren nach Anspruch 9, bei dem die Piezo-Elemente (52) das elektrische Eingangssignal auf das Fluid aufbringen, um im Wesentlichen einen Zustand des Fluids zu ändern.

11. Verfahren nach Anspruch 9 oder 10, bei dem das Fluid ein elektrorheologisches Fluid ist.

12. Verfahren nach Anspruch 9 oder 10, bei dem das Fluid ein magnetorheologisches Fluid ist.

13. Verfahren nach einem der Ansprüche 1 bis 8, das ferner die folgenden Schritte umfasst: Befestigen einer Vielzahl von elektrischen Elementen (58) an einem lasttragenden Teil, wobei die elektrischen Elemente mit der Struktur elektrisch verbunden sind, und Anlegen einer Spannung an die elektrischen Elemente, um ein elektrisches Eingangssignal zu erzeugen, um im Wesentlichen einen Zustand des Fluids zu ändern.

14. Verfahren nach einem der vorhergehenden Ansprüche, bei dem ein Strom des Fluids durch die Vielzahl von Löchern (14) einen Dämpfungseffekt bereitstellt.

15. Fahrzeugaufhängungssystem (13), mit:
mindestens einer Dämpfungsstruktur (10), die mindestens eine mittlere Schicht (12) mit einer Vielzahl von Löchern (14) aufweist, wobei die mindestens eine mittlere Schicht im Wesentlichen zwischen einer oberen Schicht (18) mit einem oberen Rand (22) und einer unteren Schicht (20) mit einem unteren Rand (24) positioniert ist, wobei die mindestens eine Dämpfungsstruktur ferner eine Vielzahl von elastischen Teilen (30) aufweist, die im Wesentlichen zwischen jeder der Schichten positioniert sind, **dadurch gekennzeichnet, dass** die mindestens eine Dämpfungsstruktur ein Fluid enthält und die obere Schicht und die untere Schicht im Wesentlichen in der Nähe des oberen Randes und des unteren Randes aneinander befestigt sind, um das Fluid in der mindestens einen Dämpfungsstruktur einzuschließen, wobei die mindestens eine Dämpfungsstruktur mit mindestens einem Aufhängungsbauteil (11) verbunden ist.

16. Fahrzeugaufhängungssystem (13) nach Anspruch 15, bei dem es eine Vielzahl von Aufhängungsbauteilen (11) und eine Vielzahl von Dämpfungsstrukturen (10) gibt, wobei jede der Vielzahl von Dämpfungsstrukturen im Wesentlichen zwischen der Vielzahl von Aufhängungsbauteilen positioniert ist.

17. Fahrzeugaufhängungssystem nach Anspruch 15 oder 16, bei dem das Aufhängungsbauteil (11) eine Feder ist, vorzugsweise eine Blattfeder.

18. Fahrzeugaufhängungssystem nach einem der Ansprüche 15 bis 17, bei dem die obere Schicht (18), die untere Schicht (20) und die mindestens eine mittlere Schicht (12) aus Stahl bestehen.

19. Fahrzeugaufhängungssystem nach einem der Ansprüche 15 bis 18, bei dem es eine der mindestens einen mittleren Schicht (12) gibt.

20. Fahrzeugaufhängungssystem nach einem der Ansprüche 15 bis 19, bei dem das mindestens eine elastische Teil (20) aus Gummi besteht.

21. Fahrzeugaufhängungssystem nach einem der Ansprüche 15 bis 20, bei dem die Vielzahl von elastischen Teilen (30) auf einer Oberseite (32) einer jeden der mindestens einen mittleren Schicht und auf einer Oberseite (34) der unteren Schicht positioniert sind.

22. Fahrzeugaufhängungssystem nach einem der Ansprüche 15 bis 20, bei dem die Vielzahl von elastischen Teilen auf einer Unterseite (38) einer jeden der mindestens einen mittleren Schicht und auf einer Unterseite (36) der oberen Schicht positioniert sind.

23. Fahrzeugaufhängungssystem nach einem der Ansprüche 15 bis 22, bei dem die obere Schicht (18) und die untere Schicht (20) durch Schweißen aneinander befestigt sind, um das Fluid in der mindestens einen Dämpfungsstruktur einzuschließen.

24. Fahrzeugaufhängungssystem nach einem der Ansprüche 15 bis 22, bei dem die obere Schicht (18) und die untere Schicht (20) durch Befestigungsteile (48) aneinander befestigt sind.

25. Fahrzeugaufhängungssystem nach einem der Ansprüche 15 bis 24, bei dem das Fahrzeugaufhängungssystem ferner eine Vielzahl von Piezo-Elementen (52) umfasst, die mit der Dämpfungsstruktur elektrisch verbunden sind, wobei die Vielzahl von Piezo-Elementen unter einer auf das Fahrzeugaufhängungssystem aufgebrachten Last ein elektrisches Eingangssignal zu der Dämpfungsstruktur übertragen.

26. Fahrzeugaufhängungssystem nach Anspruch 25, bei dem das elektrische Eingangssignal im Wesentlichen einen Zustand des Fluids ändert.

27. Fahrzeugaufhängungssystem nach Anspruch 25 oder 26, bei dem das Fluid ein elektrorheologisches Fluid ist.

28. Fahrzeugaufhängungssystem nach Anspruch 25 oder 26, bei dem das Fluid ein magnetorheologisches Fluid ist.

29. Fahrzeugaufhängungssystem nach einem der Ansprüche 15 bis 24, bei dem das Fahrzeugaufhängungssystem ferner ein lasttragendes Teil mit einer Vielzahl von elektrischen Elementen (58) umfasst, wobei die Vielzahl von elektrischen Elementen mit der Struktur elektrisch verbunden sind, um ein elektrisches Eingangssignal zu der Struktur zu übertragen, wenn eine Spannung an die elektrischen Elemente angelegt wird, um das elektrische Eingangssignal zu erzeugen, um im Wesentlichen einen Zustand des Fluids zu ändern.

30. Verfahren zur Bildung einer Aufhängungsstruktur nach einem der Ansprüche 1 bis 14 oder eines Fahrzeugaufhängungssystems nach einem der Ansprüche 15 bis 29, bei dem die elastischen Teile elastische Streifen sind.

## Revendications

1. Un procédé pour former une structure de suspension (13), comprenant les étapes consistant à:
- former une structure d'amortissement (10) en formant une pluralité de trous (14) dans au moins une tôle intermédiaire (12), positionner ladite tôle intermédiaire essentiellement entre une tôle supérieure (18) ayant un bord supérieur (22), et une tôle inférieure (20) ayant un bord inférieur (24), positionner une pluralité d'éléments élastiques (30) essentiellement entre chacune desdites tôles, **caractérisé en ce que** le procédé comprend en outre les étapes consistant à répartir un fluide essentiellement entre chacune desdites tôles, assujettir ladite tôle supérieure et ladite tôle inférieure ensemble essentiellement à proximité dudit bord supérieur et dudit bord inférieur afin de sceller ledit fluide à l'intérieur de ladite structure d'amortissement; et
- fixer ladite structure d'amortissement dans un composant de suspension (11).

2. Le procédé selon la revendication 1, comprenant en outre l'étape consistant à mettre en forme ladite tôle supérieure (18), ladite tôle inférieure (20), et ladite au moins une tôle intermédiaire (18) selon une forme souhaitée, chacune des dites tôles étant essentiellement mise en forme de telle sorte que lesdites tôles s'ajustent essentiellement les unes aux autres lorsqu'elles sont assemblées.

3. Le procédé selon la revendication 1 ou 2, dans lequel l'étape consistant à positionner ladite pluralité d'éléments élastiques (30) comprend en outre le fait d'assujettir chaque élément parmi ladite pluralité d'éléments élastiques à une surface supérieure (32) de chacune de ladite au moins une tôle intermédiaire, et à une surface supérieure (34) de ladite tôle inférieure.

4. Le procédé selon la revendication 1 ou 2, dans lequel l'étape consistant à positionner ladite pluralité d'éléments élastiques (30) comprend en outre le fait d'assujettir chaque élément parmi ladite pluralité d'éléments élastiques (30) à une surface inférieure (38) de chacune de ladite au moins une tôle intermédiaire et à une surface inférieure (36) de ladite tôle inférieure.

5. Le procédé selon l'une quelconque des revendications précédentes, dans lequel l'étape consistant à assujettir ladite tôle supérieure (18) à ladite tôle inférieure (20) inclut en outre le fait de souder ledit bord supérieur (22) de ladite tôle supérieure audit bord inférieur (24) de ladite tôle inférieure afin de sceller ledit fluide à l'intérieur de ladite structure d'amortissement.

6. Le procédé selon l'une quelconque des revendications 1 à 4, dans lequel l'étape consistant à assujettir ladite tôle supérieure (18) à ladite tôle inférieure (20) inclut en outre le fait de faire passer une pluralité d'éléments de fixation (48) à travers une pluralité de trous alignés (46) sur ladite tôle supérieure et ladite tôle inférieure, ledit fluide étant scellé par une bande élastique continue (42) essentiellement positionnée entre ladite tôle supérieure et ladite tôle inférieure.

7. Le procédé selon la revendication 6, dans lequel ladite pluralité d'éléments de fixation (48) est positionnée essentiellement entre ladite bande élastique (42), ledit bord supérieur aligné et ledit bord inférieur.

8. Le procédé selon la revendication 6 ou 7, dans lequel ladite pluralité d'éléments de fixation (48) est constituée de rivets.

9. Le procédé selon l'une quelconque des revendications précédentes, comprenant en outre l'étape consistant à assujettir et à raccorder électriquement une pluralité d'éléments piézo-électriques (52) à un ressort, lesdits éléments piézo-électriques étant raccordés électriquement à ladite structure, ledit fluide étant réactif à une alimentation électrique produite par ladite pluralité d'éléments piézo-électriques par l'application d'une charge sur ledit ressort.

10. Le procédé selon la revendication 9, dans lequel lesdits éléments piézo-électriques (52) appliquent ladite alimentation électrique audit fluide afin de modifier essentiellement un état dudit fluide.

11. Le procédé selon la revendication 9 ou 10, dans lequel ledit fluide est électro-rhéologique.

12. Le procédé selon la revendication 9 ou 10, dans lequel ledit fluide est magnéto-rhéologique.

13. Le procédé selon l'une quelconque des revendications 1 à 8, comprenant en outre les étapes consistant à assujettir une pluralité d'éléments électriques (58) pour charger un élément de transport, lesdits éléments électriques étant raccordés électriquement à ladite structure, et appliquer une tension auxdits éléments électriques pour produire une alimentation électrique afin de modifier essentiellement un état dudit fluide.

14. Le procédé selon l'une quelconque des revendications précédentes, dans lequel un écoulement dudit fluide à travers ladite pluralité de trous (14) fournit un effet d'amortissement.

15. Un système de suspension de véhicule (13) comprenant:
- au moins une structure d'amortissement (10) incluant au moins une tôle intermédiaire (12) ayant une pluralité de trous (14), ladite au moins une tôle intermédiaire étant essentiellement positionnée entre une tôle supérieure (18) ayant un bord supérieur (22) et une tôle supérieure (20) ayant un bord inférieur (24), ladite au moins une structure d'amortissement incluant en outre une pluralité d'éléments élastiques (30) essentiellement positionnés entre chacune desdites tôles, **caractérisé en ce que** ladite au moins une structure d'amortissement inclut un fluide, et ladite tôle supérieure et ladite tôle inférieure sont assujetties ensemble à proximité dudit bord supérieur et dudit bord inférieur pour sceller ledit fluide à l'intérieur de ladite structure d'amortissement, ladite au moins une structure d'amortissement étant reliée à au moins un composant de suspension (11).

16. Le système de suspension de véhicule (13) selon la revendication 15, dans lequel se trouvent une pluralité de composants de suspension (11) et une pluralité de structures d'amortissement (10), chacune parmi ladite pluralité de structures d'amortissement étant positionnée essentiellement entre ladite pluralité de composants de suspension.

17. Le système de suspension de véhicule selon la revendication 15 ou 16, dans lequel le composant de ladite suspension (11) est un ressort, de préférence un ressort à lames.

18. Le système de suspension de véhicule selon l'une quelconque des revendications 15 à 17, dans lequel ladite tôle supérieure (18), ladite tôle inférieure (20) et ladite au moins une tôle intermédiaire (12) sont fabriquées en acier.

19. Le système de suspension de véhicule selon l'une quelconque des revendications 15 à 18, dans lequel se trouve une des dites au moins une tôle intermédiaire (12).

20. Le système de suspension de véhicule selon l'une quelconque des revendications 15 à 19, dans lequel ledit au moins un élément élastique (20) est fabriqué en caoutchouc.

21. Le système de suspension de véhicule selon l'une quelconque des revendications 15 à 20, dans lequel ladite pluralité d'éléments élastiques (30) est positionnée sur une surface supérieure (32) de chacune de ladite au moins une tôle intermédiaire, et sur une surface supérieure (34) de ladite tôle inférieure.

22. Le système de suspension de véhicule selon l'une quelconque des revendications 15 à 20, dans lequel ladite pluralité d'éléments élastiques est positionnée sur une surface inférieure (38) de chacune de ladite au moins une tôle intermédiaire, et sur une surface inférieure (36) de ladite tôle supérieure.

23. Le système de suspension de véhicule selon l'une quelconque des revendications 15 à 22, dans lequel ladite tôle supérieure (18) et ladite tôle inférieure (20) sont assujetties par soudage afin de sceller le fluide à l'intérieur de ladite au moins une structure d'amortissement.

24. Le système de suspension de véhicule selon l'une quelconque des revendications 15 à 22, dans lequel ladite tôle supérieure (18) et ladite tôle inférieure (20) sont assujetties par des éléments de fixation (48).

25. Le système de suspension de véhicule selon l'une quelconque des revendications 15 à 24, dans lequel le système de suspension de véhicule inclut en outre une pluralité d'éléments piézo-électriques (52) raccordés électriquement à ladite structure d'amortissement, ladite pluralité d'éléments piézo-électriques fournissant une alimentation électrique à ladite structure d'amortissement sous une charge appliquée audit système de suspension de véhicule.

26. Le système de suspension de véhicule selon la revendication 25, dans lequel ladite alimentation électrique modifie essentiellement un état dudit fluide.

27. Le système de suspension de véhicule selon la revendication 25 ou 26, dans lequel ledit fluide est électro-rhéologique.

28. Le système de suspension de véhicule selon la revendication 25 ou 26, dans lequel ledit fluide est magnéto-rhéologique.

29. Le système de suspension de véhicule selon l'une quelconque des revendications 15 à 24, dans lequel ledit système de suspension de véhicule inclut en outre un élément de transport de charge incluant une pluralité d'éléments électriques (58), ladite pluralité d'éléments électriques étant raccordée électriquement à ladite structure pour fournir une alimentation électrique à ladite structure lorsqu'une tension est appliquée auxdits éléments électriques pour produire ladite alimentation électrique afin de modifier essentiellement un état dudit fluide.

30. Un procédé pour former une structure de suspension selon l'une quelconque des revendications 1 à 14, ou un système de suspension de véhicule selon les revendications 15 à 29, dans lequel les éléments élastiques sont des bandes élastiques.
